# EUROPEAN PATENT APPLICATION

(11) **EP 4 289 794 A1**
(43) Date of publication of application: **13.12.2023**
(21) Application number: 22778648.0
(22) Date of filing: 22.03.2022
(51) Int. Cl.: C01G 53/00, C01G 41/02, C01F 7/02, C01G 25/02, H01M 4/505, H01M 4/525, H01M 4/131, H01M 10/0525

(54) **LAYERED COBALT-FREE POSITIVE ELECTRODE MATERIAL AND PREPARATION METHOD THEREFOR, AND LITHIUM-ION BATTERY**

(30) Priority: 31.03.2021 CN 202110352067
(71) Applicant: SVOLT ENERGY TECHNOLOGY CO., LTD, Changzhou, Jiangsu 213200 (CN)
(72) Inventor: PAN, Hailong, hangzhou, Jiangsu 213200 (CN); LI, Zitan, hangzhou, Jiangsu 213200 (CN); YANG, Hongxin, hangzhou, Jiangsu 213200 (CN)
(74) Representative: Groth & Co. KB
(86) International application number: PCT/CN2022/082155
(87) International publication number: WO 2022/206465

(57) **Abstract**

Provided is a preparation method for a layered cobalt-free positive electrode material, the method comprising the steps: (1) mixing a lithium salt, a nickel source, a manganese source, a dopant and a solvent, and subjecting same to wet ball milling to obtain a mixed slurry; (2) spray drying the mixed slurry to obtain a precursor; and (3) carrying out one instance of calcination on the precursor in an oxygen-containing atmosphere to obtain the layered cobalt-free positive electrode material. Further provided are a layered cobalt-free positive electrode material, which is obtained by the preparation method, and a lithium-ion battery containing the layered cobalt-free positive electrode material. In the preparation method, an expensive cobalt element is replaced with a specific type of doping element, and wet ball milling and spray drying processes are used cooperatively, such that not only bulk phase doping can be realized, but also, a c-axis increases, layering is more obvious, and lithium-nickel mixing is reduced when crystals are formed in the material, thereby improving the stability of the material, and excellent electrochemical performance is obtained.

## Description

### TECHNICAL FIELD

The present disclosure relates to the technical field of batteries, in particular to a layered cobalt-free positive electrode material, a preparation method therefor and a lithium-ion battery.

### BACKGROUND

A global energy issue is increasingly serious, and an environmental issue is also becoming more prominent. To develop a new efficient energy technology and a new energy material has become an important way to solve social, energy and environmental issues. A lithium-ion battery, as a clean efficient energy means, is of wide interest, and is widely applied to various fields such as electronic products, automobiles and aerospace because of its high energy density, good cycle performance and other advantages. With higher and higher demands of people for environmental friendliness, run time, life and the like of the lithium-ion battery, battery design and optimization are also more and more important. Development of new energy automobiles is in urgent need for improvement on power battery specific energy and reduction of cost.

At present, specific energy of a lithium iron phosphate battery has approached to the limit, and synthetic cost of a positive electrode material of a high-capacity layered structure is high. A conventional synthetic process of a layered structure positive electrode material needs co-precipitation to synthesize a precursor, then the precursor is mixed with lithium for calcination to obtain a target product, for example, co-precipitation is performed in the following way to synthesize the precursor: a sulfate is selected as a raw material, then an appropriate precipitant is added, and a precipitate is obtained by controlling power of hydrogen, stirring temperature and speed, reaction time, a concentration and the like of a solution. The process has disadvantages of producing much industrial wastewater, having many synthetic process steps, costing highly, and causing nonuniformity and many elements not to be doped into a crystal lattice when the precursor is mixed and doped with a lithium salt. In general, the precursor at a co-precipitation stage may be produced by a professional company, then the precursor is sold to a positive electrode material manufacturer, many steps are needed in the middle, and meanwhile, it spends much transportation cost. Besides, most of positive electrode material manufacturers stabilize a structure only through interface doping during synthesis of a layered positive electrode material, which has a defect of fast attenuation during cycle.

### SUMMARY OF THE INVENTION

A method for preparing a layered cobalt-free positive electrode material is provided in an embodiment of the present disclosure and includes the following steps:
(1) mixing a lithium salt, a nickel source, a manganese source, a dopant and a solvent, and then carrying out a wet ball-milling to obtain a mixed slurry;
(2) spray drying the mixed slurry to obtain a precursor; and
(3) carrying out a primary calcination on the precursor in an oxygen-containing atmosphere to obtain the layered cobalt-free positive electrode material, wherein the chemical formula of the layered cobalt-free positive electrode material is LiₐNi_{b}Mn_{c}M_{d}O₂, wherein 1.0≤a≤1.2, 0≤b≤1.0, 0≤c≤1.0, b+c=1, 0<d≤0.1; and
wherein the doping element M in the dopant is selected from at least one of Ta, Rb, Sr, Zr, Na, Cs, Y, W, B, Nb, Ba, Mo or P.

In the layered cobalt-free positive electrode material obtained by the method provided in the embodiment of the present disclosure, a may be, for example, 1.0, 1.05, 1.1, 1.05, 1.1, 1.2 or the like, b may be, for example, 0, 0.1, 0.2, 0.3, 0.5, 0.7, 0.8, 1.0 or the like, c may be, for example, 0, 0.2, 0.3, 0.4, 0.5, 0.6, 0.8, 1.0 or the like, d may be, for example, 0.002, 0.003, 0.004, 0.005, 0.006, 0.008, 0.01, 0.015, 0.017, 0.02, 0.025, 0.03, 0.035, 0.04, 0.045, 0.05, 0.055, 0.06, 0.065, 0.07, 0.075, 0.08, 0.085, 0.09, 0.1 or the like.

In an embodiment, d is 0.002 to 0.01.

In the present disclosure, consumptions of the nickel source, the manganese source, the lithium salt and the dopant should meet a formula ratio, namely, a molar ratio of corresponding elements lithium to nickel to manganese to M meets a:b:c:d.

In a nickel-cobalt-manganese ternary material, cobalt plays a very important role in structure stabilizing, however, development and application of the ternary material are limited due to high price of the cobalt, a cobalt-free material avoids use of the cobalt, so cost is greatly reduced, the cobalt-free material is expected to replace the ternary material, but due to the lack of the cobalt, structure stability of the cobalt-free material is reduced greatly, and playing of its electrochemical performance is affected. An embodiment of the present disclosure replaces the expensive cobalt element with the above specific type of doping element, especially, a doping element with a larger ionic radius, wet ball-milling and spray drying processes are used cooperatively, so not only can bulk phase doping be realized, but also a c-axis increases, layering is more obvious, and lithium-nickel mixing is reduced when crystals are formed in the material, thereby improving the stability of the material, and excellent electrochemical performance is obtained.

In the method provided by the embodiment of the present disclosure, raw materials are mixed directly, the layered positive electrode material is prepared through calcination, the process method is less studied at home and abroad and, compared with a conventional co-precipitation method and sol-gel method, has the following advantages: the method is simple, less wastewater is produced in the process, cost is low, bulk phase doping of elements can be implemented on the premise of omitting the cobalt, the doping element uniformly enters a crystal lattice, and the stability of the material is improved.
In an embodiment, the doping element M is at least one of Zr, Sr, Ta, W or Y
In an embodiment, the doping element M is Zr, a combination of Zr and Sr, a combination of Zr and Ta, or a combination of W and Y

Different types of doping elements cause different crystal parameters in a crystal structure, and layered materials are different mainly in c axes, which leads to difference in electrical performance.

In an embodiment, the dopant is an oxide of M and/or a salt of M.

In an embodiment, the doping element is the oxide of M.

In an embodiment, the nickel source in step (1) is selected from at least one of a nickel salt or an oxide of nickel.

In an embodiment, the nickel source in step (1) is NiO.

In an embodiment, the manganese source in step (1) is selected from at least one of a manganese salt or an oxide of manganese.

In an embodiment, the manganese source in step (1) is Mn₃O₄.

In an embodiment, the lithium salt in step (1) includes Li₂CO₃ and/or LiOH.

In an embodiment, the nickel source, the manganese source and the lithium salt are selected from NiO, Mn₃O₄, Li₂CO₃ and LiOH, and these products are staple commodities in the market, stable in performance and easy to process.

In an embodiment, the wet ball-milling in step (1) is carried out at a speed of ranging from 2000 r/min to 3000 r/min, for example, 2000 r/min, 2200 r/min, 2300 r/min, 2400 r/min, 2500 r/min, 2600 r/min, 2800 r/min, 3000 r/min or the like, for a time period of ranging from 1 h to 2 h, for example, 1 h, 1.2 h, 1.3 h, 1.5 h, 1.7 h, 1.8 h, 2 h or the like.

In an embodiment, a volume fraction of oxygen in the oxygen-containing atmosphere in step (3) is greater than 20%, for example, 21%, 25%, 30%, 50%, 60%, 70%, 80%, 90% or 100%.

In an embodiment, the primary calcination in step (3) is carried out at a temperature of ranging from 700°C to 1100°C, for example, 700°C, 750°C, 800°C, 825°C, 850°C, 880°C, 900°C, 950°C, 1000°C, 1050°C, 1100°C or the like.

In an embodiment, the primary calcination in step (3) is carried out at a temperature of ranging from 800°C to 950°C.

In an embodiment, the primary calcination in step (3) is carried out for a time period of ranging from 6 h to 20 h, for example, 6 h, 8 h, 9 h, 10 h, 12 h, 15 h, 17 h, 18 h, 20 h or the like.

In an embodiment, the primary calcination in step (3) is carried out for a time period of ranging from 8 h to 15 h.

A temperature and time of primary calcination may affect forming of a layered structure of the positive electrode material and have a certain influence on crystallinity, and within the above range, the layered structure is easy to form and crystallinity is high.

In an embodiment, the method further includes performing coating treatment on the layered cobalt-free positive electrode material after step (3).

In an embodiment, the coating treatment includes: mixing the layered cobalt-free positive electrode material with a coating agent, and carrying out a secondary calcination in an oxygen-containing atmosphere to obtain a coated layered cobalt-free positive electrode material.

In an embodiment, the coating agent includes at least one of Al₂O₃, ZrO₂ or WO₃.

In an embodiment, a mass ratio of the layered cobalt-free positive electrode material to the coating agent is 100:(0.12-0.4), for example, 100:0.12, 100:0.15, 100:0.18, 100:0.2, 100:0.22, 100:0.26, 100:0.28, 100:0.3, 100:0.33, 100:0.35, 100:0.37, 100:0.4 or the like.

In an embodiment, the secondary calcination is carried out at a temperature of ranging from 300°C to 900°C. for example, 300°C, 350°C, 400°C, 500°C, 550°C, 600°C, 650°C, 700°C, 750°C, 800°C or the like.

In an embodiment, the secondary calcination is carried out at a temperature of ranging from 500°C to 800°C.

In an embodiment, the secondary calcination is carried out for a time period of ranging from 3 h to 10 h, for example, 3 h, 4 h, 5 h, 6 h, 7 h, 8 h, 9 h, 10 h or the like.

In an embodiment, the secondary calcination is carried out for a time period of ranging from 4 h to 7 h.

By performing coating and secondary calcination on the layered cobalt-free positive electrode material, conductivity of the material may be enhanced, a surface of the positive electrode material is repaired, and the surface of the positive electrode material is prevented from having a strong side reaction with an electrolyte. By optimizing a temperature and time of the secondary calcination, a better coating effect may be obtained.

In an embodiment, steps of crushing and sieving are carried out on the layered cobalt-free positive electrode material before the coating treatment.

In an embodiment, the method includes the following steps:
S1: formulating the lithium salt, the nickel source, the manganese source and the dopant MOₓ (x is an oxygen content meeting a valence balance of MOₓ elements) according to a molar ratio a:b:c:d of lithium to nickel to manganese to M, then adding them into deionized water in sequence for uniform mixing to form a suspension, adding the suspension into a ceramic grinding machine, and milling at a speed of 2000 r/min for a time period of 1 h to obtain a slurry;
S2: spray drying the slurry to obtain powder, calcinating the powder at a temperature of ranging from 800°C to 950°C for a time period of ranging from 8 h to 15 h in an air atmosphere, and cooling, crushing and sieving to obtain a layered positive electrode material LiₐNi_{b}Mn_{c}M_{d}O₂, wherein 1.0<a<1.2, 0≤b≤1.0, 0≤c≤1.0, b+c=1, 0<d≤0.1; and
S3: formulating the layered positive electrode material LiₐNi_{b}Mn_{c}M_{d}O₂ and the coating agent according to a mass ratio 100:(0.15-0.4), mixing in a high-speed mixer, and calcinating the obtained mixture in an air atmosphere at a temperature of ranging from 500°C to 800°C for a time period of ranging from 4 h to 7 h to obtain a coated layered cobalt-free positive electrode material, wherein the positive electrode material is also a layered positive electrode material;
wherein the dopant is selected from at least one of oxides of Zr, Sr, Ta, W or Y; and
the coating agent is selected from at least one of Al₂O₃, ZrO₂ or WO₃.

In the method provided in the embodiment of the present disclosure, the expensive cobalt element is replaced with the above specific type of doping element, especially, a doping element (for example, Zr, Sr, Ta, W and Y) with a larger ionic radius, wet ball-milling and spray drying processes are used cooperatively, so not only can bulk phase doping be realized, but also a c-axis increases, layering is more obvious, and lithium-nickel mixing is reduced when crystals are formed in the material, thereby improving the stability of the material, and excellent electrochemical performance is obtained.

In the method provided by the embodiment of the present disclosure, raw materials are mixed directly, the layered positive electrode material is prepared through calcination, and compared with a conventional co-precipitation method and sol-gel method, the method has the following advantages: the method is simple, less wastewater is produced in the process, cost is low, bulk phase doping of elements can be implemented on the premise of omitting the cobalt, the doping element uniformly enters a crystal lattice, and the stability of the material is improved.

A layered cobalt-free positive electrode material obtained by the above method is provided in an embodiment of the present disclosure.

A lithium-ion battery is provided in an embodiment of the present disclosure and includes the above layered cobalt-free positive electrode material.

### BRIEF DESCRIPTION OF THE DRAWINGS

Accompanying drawings are for providing further understanding of the technical solutions of the present disclosure, constitute a part of the specification and together with the embodiments of the present application, serve to explain the technical solutions of the present disclosure without constituting the limitation on the technical solutions of the present disclosure.
FIG. 1 is a comparison diagram of specific capacity of a layered positive electrode material obtained in Embodiment 4 of the present disclosure and specific capacity of a layered positive electrode material obtained in Comparative embodiment 1.
FIG. 2 is a comparison diagram of cycle of a layered positive electrode material obtained in Embodiment 4 of the present disclosure and cycle of a layered positive electrode material obtained in Comparative embodiment 1.
FIG. 3 is a comparison diagram of XRD of a layered positive electrode material obtained in Embodiment 4 of the present disclosure and XRD of a layered positive electrode material obtained in Comparative embodiment 1.

### DETAILED DESCRIPTION

The technical solutions of the present disclosure are further described below through specific implementations. Those skilled in the art should understand that the embodiments are only intended to help understand the present disclosure but not to be regarded as a specific limitation on the present disclosure.

### Embodiment 1

This embodiment provides a method for preparing a layered positive electrode material. The method includes the following steps:
(1) a lithium salt Li₂CO₃, a nickel source NiO, a manganese source Mn₃O₄ and a dopant ZrO₂ are formulated according to a molar ratio 1.05:0.6:0.4:0.003 of lithium to nickel to manganese to cobalt, and then added into deionized water in sequence for uniform mixing to form a suspension, the suspension is added into a ceramic grinding machine and milled at a speed of 2000 r/min for a time period of 1 h to obtain a slurry, and the slurry is spray dried at a temperature of 180°C to obtain powder.
(2) The above powder is calcinated at a temperature of 900°C for a time period of 12 h in an air atmosphere, cooled, crushed and sieved to obtain a layered positive electrode material. The above obtained positive electrode material and a coating agent WO₃ are formulated according to a mass ratio 100:0.13, and mixed in a high-speed mixer, the obtained mixture is calcinated in an air atmosphere at a temperature of 500°C for a time period of 5 h, and then a final layered positive electrode material may be obtained.

### Embodiment 2

This embodiment provides a method for preparing a layered positive electrode material. The method includes the following steps: (1) a lithium salt Li₂CO₃, a nickel source NiO, a manganese source Mn₃O₄ and a dopant ZrO₂ are formulated according to a molar ratio 1.05:0.75:0.25:0.004 of lithium to nickel to manganese to cobalt, and then added into deionized water in sequence for uniform mixing to form a suspension, the suspension is added into a ceramic grinding machine and milled at a speed of 2000 r/min for a time period of 1 h to obtain a slurry, and the slurry is spray dried at a temperature of 180°C to obtain powder.
(2) The above powder is calcinated at a temperature of 880°C for a time period of 10 h in an air atmosphere, cooled, crushed and sieved to obtain a layered positive electrode material. The above obtained positive electrode material and a coating agent Al₂O₃ are formulated according to a mass ratio 100:0.2, and mixed in a high-speed mixer, the obtained mixture is calcinated in an air atmosphere at a temperature of 600°C for a time period of 5 h, and then a final layered positive electrode material may be obtained.

### Embodiment 3

This embodiment provides a method for preparing a layered positive electrode material. The method includes the following steps:
(1) a lithium salt LiOH, a nickel source NiCO₃, a manganese source MnCO₃ and a dopant (Ta₂O₅ and ZrO₂) are formulated according to a molar ratio 1.06:0.3:0.7:0.006:0.004 of lithium to nickel to manganese to tantalum to cobalt, and then added into deionized water in sequence for uniform mixing to form a suspension, the suspension is added into a ceramic grinding machine and milled at a speed of 2500 r/min for a time period of 1.5 h to obtain a slurry, and the slurry is spray dried at a temperature of 180°C to obtain powder. The above powder is calcinated at a temperature of 860°C for a time period of 10 h in an air atmosphere, cooled, crushed and sieved to obtain a layered positive electrode material.
(2) The above obtained positive electrode material and a coating agent WO₃ are formulated according to a mass ratio 100:0.15, and mixed in a high-speed mixer, the obtained mixture is calcinated in an air atmosphere at a temperature of 500°C for a time period of 6 h, and then a final layered positive electrode material may be obtained.

### Embodiment 4

This embodiment provides a method for preparing a layered positive electrode material. The method includes the following steps:
(1) a lithium salt Li₂CO₃, a nickel source NiO, a manganese source Mn₃O₄ and a dopant ZrO₂ are formulated according to a molar ratio 1.06:0.8:0.2:0.002 of lithium to nickel to manganese to cobalt, and then added into deionized water in sequence for uniform mixing to form a suspension, the suspension is added into a ceramic grinding machine and milled at a speed of 2500 r/min for a time period of 1.2 h to obtain a slurry, and the slurry is spray dried at a temperature of 180°C to obtain powder. The above powder is calcinated at a temperature of 860°C for a time period of 10 h in an air atmosphere, cooled, crushed and sieved to obtain a layered positive electrode material.
(2) The above obtained positive electrode material and coating agents ZrO₂ and Al₂O₃ are formulated according to a mass ratio 100:0.17:0.2, and mixed in a high-speed mixer, the obtained mixture is calcinated in an air atmosphere at a temperature of 700°C for a time period of 6 h, and then a final layered positive electrode material may be obtained.

### Embodiment 5

This embodiment provides a method for preparing a layered positive electrode material. The method includes the following steps:
(1) a lithium salt Li₂CO₃, a nickel source NiO, a manganese source MnCO₃ and a dopant (WO₃ and Y₂O₃) are formulated according to a molar ratio 1.07:0.9:0.1:0.003:0.004 of lithium to nickel to manganese to wolfram to yttrium, and then added into deionized water in sequence for uniform mixing to form a suspension, the suspension is added into a ceramic grinding machine and milled at a speed of 2800 r/min for a time period of 2 h to obtain a slurry, and the slurry is spray dried at a temperature of 180°C to obtain powder. The above powder is calcinated at a temperature of 920°C for a time period of 10 h in an air atmosphere, cooled, crushed and sieved to obtain a layered positive electrode material.
(2) The above obtained positive electrode material and a coating agent ZrO₂ are formulated according to a mass ratio 100:0.17, and mixed in a high-speed mixer, the obtained mixture is calcinated in an air atmosphere at a temperature of 700°C for a time period of 6 h, and then a final layered positive electrode material may be obtained.

### Embodiment 6

This embodiment provides a method for preparing a layered positive electrode material. The method includes the following steps:
(1) a lithium salt Li₂CO₃, a nickel source NiCO₃, a manganese source MnCO₃ and a dopant BaCO₃ are formulated according to a molar ratio 1.05:0.5:0.5:0.003 of lithium to nickel to manganese to barium, and then added into deionized water in sequence for uniform mixing to form a suspension, the suspension is added into a ceramic grinding machine and milled at a speed of 2500 r/min for a time period of 1.5 h to obtain a slurry, and the slurry is spray dried at a temperature of 180°C to obtain powder.
(2) The above powder is calcinated at a temperature of 860°C for a time period of 10 h in an air atmosphere, cooled, crushed and sieved to obtain a layered positive electrode material. The above obtained positive electrode material and the coating agent WO₃ are formulated according to a mass ratio 100:0.2, and mixed in a high-speed mixer, the obtained mixture is calcinated in an air atmosphere at a temperature of 400°C for a time period of 6 h, and then a final layered positive electrode material may be obtained.

### Embodiment 7

This embodiment provides a method for preparing a layered positive electrode material. The method includes the following steps:
(1) a lithium salt Li₂CO₃, a nickel source NiO, a manganese source MnO₂ and a dopant ZrO₂ are formulated according to a molar ratio 1.05:0.25:0.75:0.003 of lithium to nickel to manganese to zirconium, and then added into deionized water in sequence for uniform mixing to form a suspension, the suspension is added into a ceramic grinding machine and milled at a speed of 3000 r/min for a time period of 1.5 h to obtain a slurry, and the slurry is spray dried at a temperature of 180°C to obtain powder.
(2) The above powder is calcinated at a temperature of 950°C for a time period of 10 h in an air atmosphere, cooled, crushed and sieved to obtain a layered positive electrode material. The above obtained positive electrode material and the coating agent Al₂O₃ are formulated according to a mass ratio 100:0.2, and mixed in a high-speed mixer, the obtained mixture is calcinated in an air atmosphere at a temperature of 600°C for a time period of 5 h, and then a final layered positive electrode material may be obtained.

### Embodiment 8

This embodiment provides a method for preparing a layered positive electrode material. The method includes the following steps:
(1) a lithium salt Li₂CO₃, a nickel source NiO, a manganese source Mn₃O₄ and a dopant BaO are formulated according to a molar ratio 1.06:0.8:0.2:0.002 of lithium to nickel to manganese to barium, and then added into deionized water in sequence for uniform mixing to form a suspension, the suspension is added into a ceramic grinding machine and milled at a speed of 2500 r/min for a time period of 1.2 h to obtain a slurry, and the slurry is spray dried at a temperature of 180°C to obtain powder. The above powder is calcinated at a temperature of 860°C for a time period of 10 h in an air atmosphere, cooled, crushed and sieved to obtain a layered positive electrode material.
(2) The above obtained positive electrode material and coating agents ZrO₂ and Al₂O₃ are formulated according to a mass ratio 100:0.17:0.2, and mixed in a high-speed mixer, the obtained mixture is calcinated in an air atmosphere at a temperature of 700°C for a time period of 6 h, and then a final layered positive electrode material may be obtained.

### Embodiment 9

This embodiment provides a method for preparing a layered positive electrode material. The method includes the following steps:
(1) a lithium salt Li₂CO₃, a nickel source NiO, a manganese source Mn₃O₄ and a dopant B₂O₃ are formulated according to a molar ratio 1.06:0.8:0.2:0.002 of lithium to nickel to manganese to boron, and then added into deionized water in sequence for uniform mixing to form a suspension, the suspension is added into a ceramic grinding machine and milled at a speed of 2500 r/min for a time period of 1.2 h to obtain a slurry, and the slurry is spray dried at a temperature of 180°C to obtain powder. The above powder is calcinated at a temperature of 860°C for a time period of 10 h in an air atmosphere, cooled, crushed and sieved to obtain a layered positive electrode material.
(2) The above obtained positive electrode material and coating agents ZrO₂ and Al₂O₃ are formulated according to a mass ratio 100:0.17:0.2, and mixed in a high-speed mixer, the obtained mixture is calcinated in an air atmosphere at a temperature of 700°C for a time period of 6 h, and then a final layered positive electrode material may be obtained.

### Embodiment 10

This embodiment provides a method for preparing a layered positive electrode material. The method includes the following steps:
(1) a lithium salt Li₂CO₃, a nickel source NiO, a manganese source Mn₃O₄ and a dopant ZrO₂ are formulated according to a molar ratio 1.06:0.8:0.2:0.002 of lithium to nickel to manganese to cobalt, and then added into deionized water in sequence for uniform mixing to form a suspension, the suspension is added into a ceramic grinding machine and milled at a speed of 2500 r/min for a time period of 1.2 h to obtain a slurry, and the slurry is spray dried at a temperature of 180°C to obtain powder. The above powder is calcinated at a temperature of 700°C for a time period of 10 h in an air atmosphere, cooled, crushed and sieved to obtain a layered positive electrode material.
(2) The above obtained positive electrode material and coating agents ZrO₂ and Al₂O₃ are formulated according to a mass ratio 100:0.17:0.2, and mixed in a high-speed mixer, the obtained mixture is calcinated in an air atmosphere at a temperature of 700°C for a time period of 6 h, and then a final layered positive electrode material may be obtained.

### Embodiment 11

This embodiment provides a method for preparing a layered positive electrode material. The method includes the following steps:
(1) a lithium salt Li₂CO₃, a nickel source NiO, a manganese source Mn₃O₄ and a dopant ZrO₂ are formulated according to a molar ratio 1.06:0.8:0.2:0.002 of lithium to nickel to manganese to cobalt, and then added into deionized water in sequence for uniform mixing to form a suspension, the suspension is added into a ceramic grinding machine and milled at a speed of 2500 r/min for a time period of 1.2 h to obtain a slurry, and the slurry is spray dried at a temperature of 180°C to obtain powder. The above powder is calcinated at a temperature of 1100°C for a time period of 10 h in an air atmosphere, cooled, crushed and sieved to obtain a layered positive electrode material.
(2) The above obtained positive electrode material and coating agents ZrO₂ and Al₂O₃ are formulated according to a mass ratio 100:0.17:0.2, and mixed in a high-speed mixer, the obtained mixture is calcinated in an air atmosphere at a temperature of 700°C for a time period of 6 h, and then a final layered positive electrode material may be obtained.

### Embodiment 12

This embodiment provides a method for preparing a layered positive electrode material. The method includes the following steps:
(1) a lithium salt Li₂CO₃, a nickel source NiO, a manganese source Mn₃O₄ and a dopant ZrO₂ are formulated according to a molar ratio 1.06:0.8:0.2:0.1 of lithium to nickel to manganese to cobalt, and then added into deionized water in sequence for uniform mixing to form a suspension, the suspension is added into a ceramic grinding machine and milled at a speed of 2500 r/min for a time period of 1.2 h to obtain a slurry, and the slurry is spray dried at a temperature of 180°C to obtain powder. The above powder is calcinated at a temperature of 860°C for a time period of 10 h in an air atmosphere, cooled, crushed and sieved to obtain a layered positive electrode material.
(2) The above obtained positive electrode material and coating agents ZrO₂ and Al₂O₃ are formulated according to a mass ratio 100:0.17:0.2, and mixed in a high-speed mixer, the obtained mixture is calcinated in an air atmosphere at a temperature of 700°C for a time period of 6 h, and then a final layered positive electrode material may be obtained.

### Comparative embodiment 1

This comparative embodiment provides a method for preparing a layered positive electrode material. The method includes the following steps:
(1) a nickel source NiClz and a manganese source MnCl are formulated into a mixed aqueous solution with a molar ratio 0.8:0.2 of nickel to manganese and a concentration 80 g/L. A sodium hydroxide aqueous solution with a concentration 100 g/L and an ammonia-water solution with a concentration 180 g/L are prepared respectively and are uniformly mixed according to a volume ratio 10:1 to form a precipitant. The two prepared solutions are added into a reactor with a stirrer through a constant flow pump, a nickel and manganese salt mixed solution is controlled to flow at a rate of 300 ml/h, a pH value in the reactor is controlled to be 9.0 by adjusting a flow rate of the precipitant, a reaction temperature is controlled to be 60°C, and after reacting for a time period of 40 h, the obtained precipitate is repeatedly filtered and washed with 80°C pure water. The obtained precipitate is subjected to a drying treatment in a drying oven with a temperature set at 80°C to obtain a positive electrode material precursor.
(2) The positive electrode material precursor is mixed with a lithium source LiOH and a dopant ZrO₂ (a molar ratio of lithium to nickel to manganese to zirconium after mixing meets 1.06:0.8:0.2:0.002) to obtain a product after mixing; the product after mixing is calcinated at a temperature of 860°C for a time period of 10 h, the product after calcination is crushed and sieved; and the product after primary calcination and coating agents ZrO₂ and Al₂O₃ are mixed according to a mass ratio 100:0.17:0.2, then subjected to a heat treatment at a temperature of 700°C for a time period of 6 h, and are naturally cooled and sieved to obtain a layered positive electrode material.

### Comparative embodiment 2

This comparative embodiment provides a method for preparing a layered positive electrode material. The method includes the following steps:
(1) a lithium salt Li₂CO₃, a nickel source NiO, a manganese source Mn₃O₄ and a dopant Al₂O₃ are formulated according to a molar ratio 1.06:0.8:0.2:0.002 of lithium to nickel to manganese to aluminum, and then added into deionized water in sequence for uniform mixing to form a suspension, the suspension is added into a ceramic grinding machine and milled at a speed of 2500 r/min for a time period of 1.2 h to obtain a slurry, and the slurry is spray dried at a temperature of 180°C to obtain powder. The above powder is calcinated at a temperature of 860°C for a time period of 10 h in an air atmosphere, cooled, crushed and sieved to obtain a layered positive electrode material.
(2) The above obtained positive electrode material and coating agents ZrO₂ and Al₂O₃ are formulated according to a mass ratio 100:0.17:0.2, and mixed in a high-speed mixer, the obtained mixture is calcinated in an air atmosphere at a temperature of 700°C for a time period of 6 h, and then a final layered positive electrode material may be obtained.

### Test:

Positive electrode materials of each embodiment and each comparative embodiment are tested in the same way, first, the prepared layered positive electrode material, carbon black (SP) and polyvinylidene fluoride (PVDF) are added into N-methylpyrrolidone (NMP) according to a mass ratio 92:4:4, uniformly mixed and then applied on an aluminum foil to be dried at a temperature of 100°C for a time period of 4 h and cut into a positive electrode sheet with a diameter being 12 mm, assembling is performed to form a button half battery, the button half battery is in still standing for a time period of 12 h, an electrochemical test is performed, and a test result is shown in Table 1.

Capacity test: this test is first discharge capacity under 0.1C.

Cycle test: this test is a retention ratio of 50 cycles under 1C.

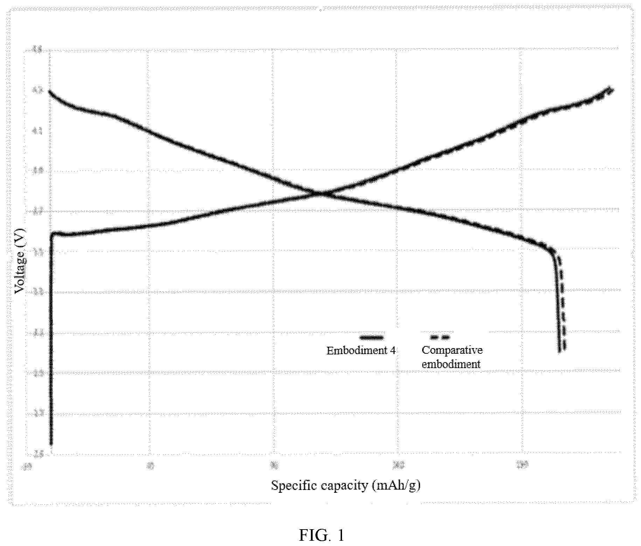

Comparison diagrams of capacities, cycles and XRD of lithium-ion battery layered positive electrode materials obtained in Embodiment 4 and Comparative embodiment 1 are shown in FIG. 1, FIG. 2 and FIG. 3 respectively.

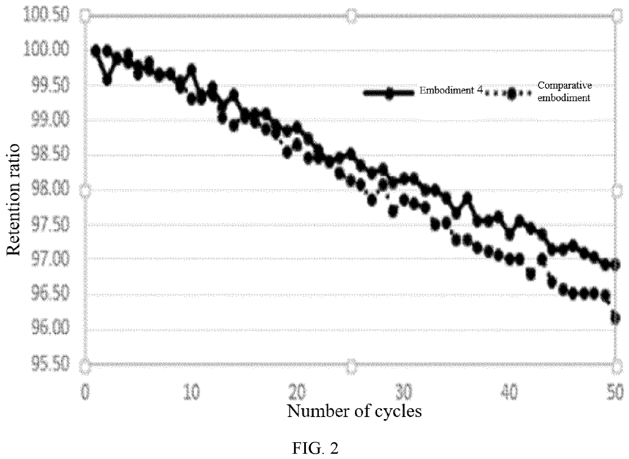

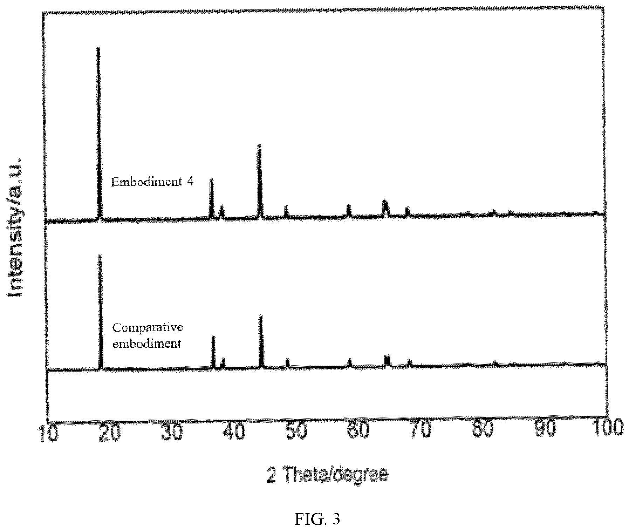

Results of FIG. 1 and FIG. 2 show that compared with a layered positive electrode material prepared by a conventional co-precipitation method, the layered positive electrode material prepared by the present disclosure is better in cycle performance and stability under the condition of the equivalent capacity. A result of FIG. 3 shows that the present disclosure truly prepares the layered positive electrode material, and a peak shape corresponds to a peak shape of the layered positive electrode material prepared by the conventional co-precipitation method.

**Table 1**

| Instance | First discharge capacity (mAh/g) | Capacity retention ratio (%) of 50 cycles |
|---|---|---|
| Embodiment 1 | 180.1 | 96.8 |
| Embodiment 2 | 185.4 | 96.9 |
| Embodiment 3 | 145.2 | 97.9 |
| Embodiment 4 | 205.2 | 96.9 |
| Embodiment 5 | 212.1 | 97.8 |
| Embodiment 6 | 164.1 | 98.5 |
| Embodiment 7 | 138.3 | 98.9 |
| Embodiment 8 | 201.2 | 96.0 |
| Embodiment 9 | 202.1 | 95.5 |
| Embodiment 10 | 199.2 | 95.8 |
| Embodiment 11 | 194.1 | 95.4 |
| Embodiment 12 | 196.2 | 96.1 |
| Comparative embodiment 1 | 207.4 | 96.1 |
| Comparative embodiment 2 | 192.2 | 95.0 |

The present disclosure performs bulk phase doping by using specific types of elements and may obtain good structure stability on the premise of omitting cobalt and obtain excellent cycle performance on the premise of not losing capacity.

It may be known through comparison of Embodiment 4 and Embodiments 8 to 9 that compared with barium doping and boron doping, a capacity and a retention ratio of a positive electrode material obtained by zirconium doping are better.

It may be known through comparison of Embodiment 4 and Embodiments 10 to 11 that a temperature of the primary calcination has a significant influence on product performance, and a crystal structure is more obvious in layering and better in electrical performance within a preferred range of 800°C to 950°C.

It may be known through comparison of Embodiment 4 and Embodiment 12 that too much doped zirconium has an inhibiting effect on the capacity playing.

It may be known through comparison of Embodiment 4 and Comparative embodiment 2 that zirconium doping has an advantage of capacity playing over aluminum doping.

## Claims

1. A method for preparing a layered cobalt-free positive electrode material, wherein the method comprising the following steps:
(1) mixing a lithium salt, a nickel source, a manganese source, a dopant and a solvent, and then carrying out a wet ball-milling to obtain a mixed slurry;
(2) spray drying the mixed slurry to obtain a precursor; and
(3) carrying out a primary calcination on the precursor in an oxygen-containing atmosphere to obtain the layered cobalt-free positive electrode material, wherein the chemical formula of the layered cobalt-free positive electrode material is LiₐNi_{b}Mn_{c}M_{d}O₂, wherein 1.0≤a≤1.2, 0≤b≤1.0, 0≤c≤1.0, b+c=1, 0<d≤0.1; and
wherein the doping element M in the dopant is selected from at least one of Ta, Rb, Sr, Zr, Na, Cs, Y, W, B, Nb, Ba, Mo or P.

2. The method of claim 1, wherein the doping element M is at least one of Zr, Sr, Ta, W or Y

3. The method of claim 2, wherein the doping element M is Zr, a combination of Zr and Sr, a combination of Zr and Ta, or a combination of W and Y

4. The method of any one of claims 1 to 3, wherein the dopant is an oxide of M and/or a salt of M;
the nickel source in step (1) is selected from at least one of a nickel salt or an oxide of nickel;
the manganese source in step (1) is selected from at least one of a manganese salt or an oxide of manganese; and
the lithium salt in step (1) comprises Li₂CO₃ and/or LiOH.

5. The method of any one of claims 1 to 4, wherein the wet ball-milling in step (1) is carried out at a speed of ranging from 2000 r/min to 3000 r/min for a time period of ranging from 1 h to 2 h.

6. The method of any one of claims 1 to 5, wherein a volume fraction of oxygen in the oxygen-containing atmosphere in step (3) is greater than 20%; and
the primary calcination in step (3) is carried out at a temperature of ranging from 700°C to 1100°C for a time period of ranging from 6 h to 20 h.

7. The method of any one of claims 1 to 6, wherein the method further comprises performing coating treatment on the layered cobalt-free positive electrode material after step (3);
wherein the coating treatment comprises: mixing the layered cobalt-free positive electrode material with a coating agent, and carrying out a secondary calcination in an oxygen-containing atmosphere to obtain a coated layered cobalt-free positive electrode material; wherein the coating agent comprises at least one of Al₂O₃, ZrO₂ or WO₃.

8. The method of any one of claims 1 to 7, wherein a mass ratio of the layered cobalt-free positive electrode material to the coating agent is 100:(0.12-0.4).

9. The method of any one of claims 1 to 8, wherein the secondary calcination is carried out at a temperature of ranging from 300°C to 900°C for a time period of ranging from 3 h to 10 h.

10. The method of any one of claims 7 to 9, wherein steps of crushing and sieving are carried out on the layered cobalt-free positive electrode material before the coating treatment.

11. The method of any one of claims 1 to 10, wherein the method comprises the following steps:
S1: formulating the lithium salt, the nickel source, the manganese source and the dopant MOₓ according to a molar ratio a:b:c:d of lithium to nickel to manganese to M, then adding them into deionized water in sequence for uniform mixing to form a suspension, adding the suspension into a ceramic grinding machine, and milling at a speed of 2000 r/min for 1 h to obtain a slurry;
S2: spray drying the slurry to obtain powder, calcinating the powder at a temperature of ranging from 800°C to 950°C for a time period of ranging from 8 h to 15 h in an air atmosphere, and cooling, crushing and sieving to obtain a layered positive electrode material LiₐNi_{b}Mn_{c}M_{d}O₂, wherein 1.0≤a≤1.2, 0≤b≤1.0, 0≤c≤1.0, b+c=1, 0<d≤0.1; and
S3: formulating the layered positive electrode material LiₐNi_{b}Mn_{c}M_{d}O₂ and the coating agent according to a mass ratio 100:(0.15-0.4), mixing in a high-speed mixer, and calcinating the obtained mixture in an air atmosphere at a temperature of ranging from 500°C to 800°C for a time period of ranging from 4 h to 7 h to obtain a coated layered cobalt-free positive electrode material;
wherein the dopant is selected from at least one of oxides of Zr, Sr, Ta, W or Y; and
the coating agent is selected from at least one of Al₂O₃, ZrO₂ or WO₃.

12. A layered cobalt-free positive electrode material obtained by using the method of any one of claims 1 to 11.

13. A lithium-ion battery, comprising the layered cobalt-free positive electrode material of claim 12.
